# FASCICULE DE BREVET EUROPEEN

(11) **EP 0 429 337 B1**
(45) Date de publication et mention de la délivrance du brevet: **28.12.1994**
(21) Numéro de dépôt: 90403207.5
(22) Date de dépôt: 13.11.1990
(51) Int. Cl.: G02B 6/42

(54) **Tête optique intégrable sur un circuit hybride**
Optischer Kopf integrierbar in einem hybriden Schaltkreis
Optical head integrable on a hybrid circuit

(30) Priorité: 21.11.1989 FR 8915239
(43) Date de publication de la demande: 29.05.1991
(73) Titulaire: THOMSON HYBRIDES, 92800 Puteaux (FR)
(72) Inventeur: Avelange, Jérome, F-92045 Paris la Défense (FR); Gouvernel, Thierry, F-92045 Paris la Défense (FR)
(74) Mandataire: Taboureau, James

(56) Documents cités:
- EP-A- 0 171 615
- EP-A- 0 238 977
- DE-A- 3 809 396
- FR-A- 2 581 768
- US-A- 4 803 361
- PATENT ABSTRACTS OF JAPAN, vol. 11, no. 395 (P-650)[2842], 24 décembre 1987 ; & JP-A-62 159 105

## Description

La présente invention concerne une tête optique en technologie hybride, c'est à dire un module optoélectronique permettant l'émission et la réception de signaux lumineux, transportés par une unique libre optique, ce module étant réalisé en technologie hybride, de sorte qu'il est directement intégrable sur un circuit hybride.

Dans une liaison optique bidirectionnelle monofibre, l'unique libre optique transmet, dans un sens qu'on appellera l'aller, la lumière émise par une diode laser, placée à une première extrémité de la libre, et reçue par une photodiode placée à une seconde extrémité de la libre. Dans l'autre sens, qu'on appellera le retour, la lumière émise par un second laser placé à la seconde extrémité de la libre, est reçue par une seconde photodiode, placée à la première extrémité de la libre. Il y a donc, à chaque extrémité de la libre optique, un laser et une photodiode, qui doivent tous deux être en liaison optique avec l'extrémité qui leur est voisine de la fibre optique.

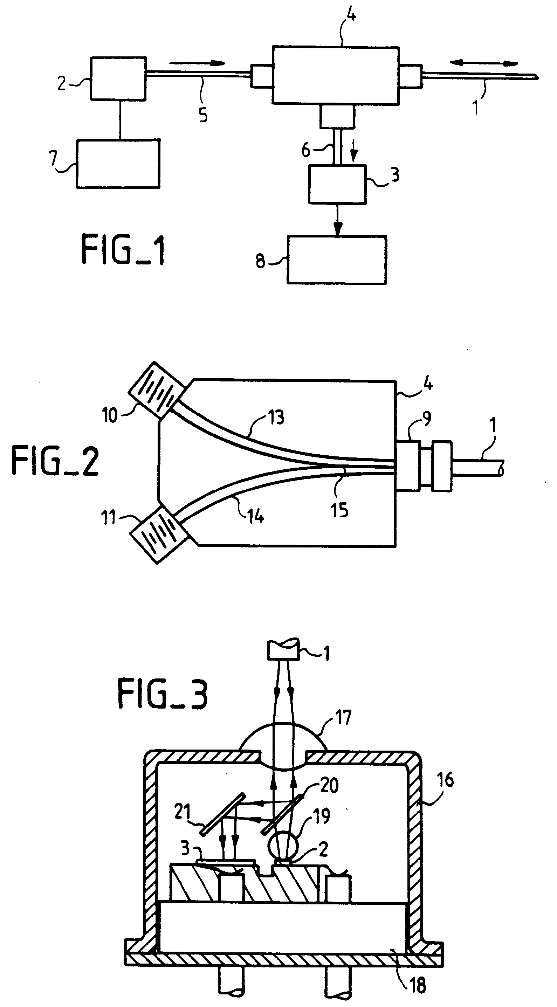

La figure 1 donne le schéma de principe d'une terminaison de libre optique bidirectionnelle : l'unique libre optique 1 transmet dans un sens la lumière reçue par la photodiode 3 et dans l'autre sens la lumière émise par le laser 2. Les dimensions respectives de la libre optique 1 et des deux semiconducteurs 2 et 3 imposent de multiplexer le faisceau lumineux par un duplexeur 4, relié au laser 2 par un tronçon de libre 5 et à la photodiode par un tronçon de libre 6. Les blocs 7 et 8 représentent, respectivement, les circuits électroniques d'émission et de réception des signaux.

Les solutions connues pour assurer ce duplexage ou couplage optique sont en général assez volumineuses : les coupleurs sont constitués par un boitier dont les faces supportent des connecteurs optiques. Il y a au moins un connecteur pour la fibre optique, un connecteur pour la laser dans son microboitier et un connecteur pour la photodiode dans son microboitier. A l'intérieur du boîtier du coupleur, des moyens simples couplent le laser à la fibre optique et la photodiode à la fibre optique. Le principal inconvénient de ces coupleurs, par ailleurs simples, est leur encombrement ; en outre en raison des très petites dimensions des fibres optiques utilisées dans les sytèmes bidirectionnels (50-100 µm), ces coupleurs requièrent une grande précision d'usinage à chaque liaison par connecteurs.

La figure 2 représente la coupe, simplifiée, d'un tel duplexeur selon l'art connu. Un boîtier 4 supporte trois connecteurs optiques 9,10 et 11. La fibre optique 1 est fixée dans le connecteur 9, et les signaux qu'elle transporte sont relayés vers les connecteurs 10 et 11 au moyen de deux tronçons de fibre 13 et 14, couplés dans la région 15. Las tronçons de fibres 5 et 6 de la figure 1 sont branchés sur les connecteurs 10 et 11. Ce duplexeur, par ailleurs très efficace, n'est en soi pas intégrable sur un circuit hybride, et nécessite trois connecteurs optiques dont on sait que la mise en oeuvre est délicate.

Afin de se passer de connecteurs optiques, la Demanderesse a mis au point une tête optique représentée en figure 3. Elle utilise un boîtier de transistor de type TO39, disponible dans le commerce, dont le couvercle 16 est muni, d'origine, d'une lentille 17. Sur l'embase 18 du boîtier de transistor sont fixées les puces d'un laser 2 et d'une photodiode 3. La lumière émise par le laser 2 est focalisée par une lentille sphérique 19 et par la lentille 17 du couvercle de boîtier en direction de la fibre optique 1. Dans le mode émission, le miroir semi-transparent 20 n'intervient pas. En réception, la lumière tranmsise par la fibre optique 1 est réfléchie par les miroirs 20 et 21 en direction de la photodiode 3. L'ensemble est décrit en détail dans la demande de brevet français n° 85 07147 déposée le 10 mai 1985.

Ce duplexeur est facile et économique à réaliser, mais il est à trois dimensions : si l'embase 18 est fixée sur un substrat, de façon conventionnelle, la fibre optique 1 est perpendiculaire au substrat, et donc dans une position peu commode, où elle est soumise à un risque de casse. Pour que la fibre optique soit dans un plan parallèle à celui du substrat, il faudrait que le boîtier TO 39 soit fixé dans un berceau, son axe de symétrie étant parallèle au substrat. Ces techniques ne sont pas homogènes avec la technologie des circuits hybrides.

Une tête optique ayant une configuration plate, rapportable sur un substrat plan et dont la fibre optique est parallèle au substrat, est décrite dans le document DE-A-3 809 396 du 21 mars 1988. Les divers composants d'un module optoélectronique émetteur-récepteur, tels que fibre optique, diodes, lentilles et circuits intégrés, sont rapportés sur une plaque de silicium qui est gravée chimiquement de sillons plus ou moins profonds, afin d'aligner les axes optiques. La réalisation d'un tel module requiert de mettre en oeuvre des moyens, des masques et une technologie qui appartiennent aux fabricants de circuits intégrés, tandis que l'intégration d'une tête optique, dont les composants appartiennent à plusieurs technologies, est plûtôt une opération de circuits hybrides. La tête optique elle-même est en outre, si possible, incluse dans un circuit hybride de traitement des signaux.

Afin de pouvoir intégrer une tête optique sur un circuit hybride, l'invention prévoit de disposer les composants -fibre optique, laser, diode, lentilles...- sur un substrat plan selon la technologie des circuits hybrides. Il s'agit donc d'une tête optique à deux dimensions, si l'on considère comme négligeable l'épaisseur des puces semiconductrices, des lentilles, de la fibre optique, qui, en tous cas, est du même ordre de grandeur que l'épaisseur des puces de semiconducteurs ou de condensateurs pavés fixées sur un circuit hybride.

De façon plus précise, l'invention concerne une tête optique intégrable sur un circuit hybride, telle que définie à la revendication 1.

L'invention sera mieux comprise par la description qui en est faite maintenant, en liaison avec les figures jointes en annexes, qui représentent :
- figure 1 : schéma d'une tête optique monofibre,
- figure 2 : schéma d'un premier type de duplexeur utilisé dans la tête optique de la figure 1,
- figure 3 : schéma d'un second type de duplexeur, les objets des figures 1 à 3 étant connus et déjà décrits ci-dessus,
- figure 4 : schéma en plan d'un circuit hybride sur lequel est intégrée une tête optique selon l'invention,
- figure 5 : schéma en plan, agrandi, de la tête optique selon l'invention.

L'invention est applicable à une pluralité de types de têtes optiques. Selon les composants utilisés, il s'agit d'un multiplexeur (deux composants semiconducteurs émetteurs de lumière), d'un démultiplexeur (deux composants semiconducteurs récepteurs de lumière) ou d'un coupleur (lame semi-réfléchissante à la place d'un miroir dichroïque). De façon à rendre la description plus claire, l'invention sera exposée en s'appuyant sur l'exemple d'un coupleur, ou duplexeur, sans pour autant limiter la portée de l'invention.

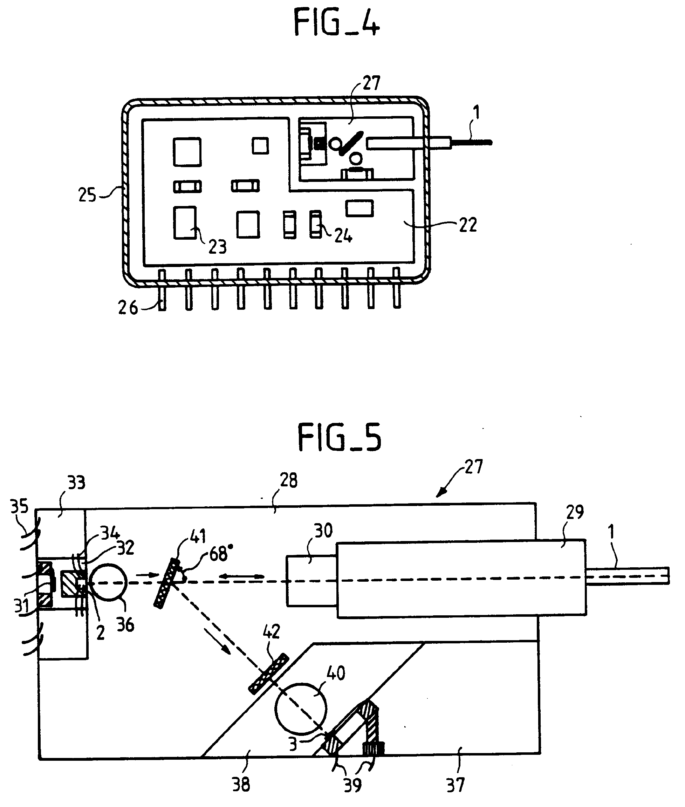

La figure 4 représente un circuit hybride comportant un duplexeur selon l'invention. Un circuit hybride est très généralement un objet plat, de faible épaisseur, formé sur un substrat 22 qui est une plaque d'alumine, d'oxyde de béryllium ou de nitrure d'aluminium. Sur cette plaque 22 sont rapportées des puces de composants actifs 23 ou passifs 24, et les interconnexions ou certains composants passifs sont déposés par des techniques de couches épaisses. En vue de protéger tous ces composants qui sont nus, un circuit hybride est toujours protégé par un boîtier d'encapsulation, dont la paroi latérale est représentée en 25. Les connexions électriques se font au moyen de passages 26 de type verre-métal. L'ensemble du boîtier 25 est plat de façon à conserver les avantages des composants montés en surface sur le circuit hybride.

Dans ces conditions, il est clair que si une tête optoélectronique doit être incluse dans un circuit hybride, des composants connus tels que ceux représentés en figures 2 et 3 ne conviennent pas bien : il y rupture de technologie. L'invention apporte une solution à ce problème en proposant une tête optoélectronique de type CMS, ou composant montable en surface, dont la technologie reste homogène avec celle des circuits hybrides ou "imprimés". C'est ainsi que, sur la figure 4, une tête optoélectronique 27, assemblée sur un substrat plan, est intégrée au circuit hybride 22. La tête 27 selon l'invention peut être réalisée directement sur le substrat plan du circuit hybride 22, mais il est plus efficace, du point de vue industriel, d'assembler la tête, en macrocomposant, sur un petit substrat indépendant, le tester, puis l'insérer dans le circuit hybride par montage en surface, sur le substrat du circuit hybride, ou à côté, comme représenté sur la figure 4. Les deux substrats sont dans ce cas ajustés de telle façon que les liaisons électriques puissent être facilement réalisée par des fils d'or thermosoudés.

Une vue en plan, agrandie, de la tête optique selon l'invention est donnée en figure 5.

Tous les composants de la tête 27 sont référencés par rapport à un substrat plan 28, qui sert de plan de référence pour des alignements optiques. Ce substrat peut être en céramique, mais est avantageusement métallique, en cuivre doré ou acier : le métal permet d'obtenir un très bon état de surface et la réalisation d'usinages très précis. En outre, une plaque métallique sert de radiateur aux composant semiconducteurs. Une forme rectangulaire est la mieux adaptée à une tête optique.

Sur cette plaque plane 28 est fixé un tube 29 ; il est préférablement métallique, a une longueur de l'ordre de 1 à 2 cm, et un diamètre intérieur qui lui permet de recevoir d'un côté la fibre optique 1 et, de l'autre côté une optique de focalisation 30, telle qu'une lentille ordinaire ou une lentille à variation d'indice. Le tube 29 est brasé ou collé sur la plaque de référence 28.

Egalement fixé sur la plaque de référence 28, et dans l'axe optique de la fibre 1, se trouve un premier ensemble optoélectronique : dans le cas d'un duplexeur, le dispositif semiconducteur dudit ensemble est un laser 2. Celui-ci, et sa photodiode 31 de contre réaction, sont fixés sur une plaquette isolante 32, munie des métallisations adéquates pour la fixation et l'alimentation électrique, elle même fixée sur une première embase 33, généralement métallique. La hauteur totale de l'isolant 32 et de l'embase 33 est telle que l'axe optique du laser 2 soit très sensiblement confondu avec l'axe optique de la fibre 1. Des fils d'or ou d'aluminium 34 et 35 assurent les polarisations électriques du laser 2 et de la diode 31, en interconnexion avec le circuit hybride 22.

Afin de focaliser sur la fibre optique 1 la lumière émise par le laser 2, une première lentille 36 est positionnée entre le laser et la lentille 30. La lentille 36 est constituée par une bille sphérique de verre ou de saphir, et son diamètre de 1,5 mm environ correspond à un bon alignement optique laser 2 - fibre 1, lorsque la bille 36 est collée directement sur le substrat 28, qui sert de plan de référence.

Un second ensemble optoélectronique tel qu'une photodiode 3 de détection est positionné latéralement par rapport au tube 29 et à la fibre optique 1. De façon comparable au laser 2, la photodiode 3 est fixée sur un support isolant 37, muni de métallisations adéquates pour la polarisation, ce support étant lui même fixé sur une deuxième embase métallique 38. Des fils d'or ou d'aluminium 39 amènent la polarisation de la photodiode, en liaison avec le circuit hybride 22. Une deuxième lentille sphérique 40, en verre ou en saphir, d'un diamètre de l'ordre de 2 mm, est collée sur l'embase métallique 38, en face de la photodiode 3.

Le faisceau lumineux émis par le laser 2, de longueur d'onde λ1, est directement focalisé par les lentilles 36 et 30 sur la fibre optique 1. Mais le faisceau lumineux transmis par la fibre optique, de longueur d'onde λ2 - provenant d'une source optique située à l'autre extrêmité de la fibre optique - doit être dévié pour atteindre la photodiode 3. Pour atteindre ce but, une lame 41 formant miroir dichroïque est placée sur l'axe optique de la fibre 1, entre les lentilles 30 et 36. Ce miroir dichroïque est incliné de 68 ° par rapport à l'axe optique, ce qui correspond à un optimum de séparation entre les longueurs d'ondes λ1 et λ2. La position du miroir dichroïque 41, plus ou moins près de la lentille 30 ou de la lentille 36, n'est pas primordiale : elle permet de positionner au mieux le second ensemble optoélectronique, de façon à obtenir une tête optique compacte.

Dans ces conditions, le faisceau lumineux de longueur d'onde λ1, émis par le laser 2, traverse le miroir dichroïque 41 sans déviation, et est focalisé sur la fibre optique 1. Par contre, le faisceau lumineux de longueur d'onde λ2, émis par la fibre optique 1, est dévié par le miroir dichroïque 41, en direction de la lentille 40 et de la photodiode 3.

Pour assurer une bonne séparation der signaux optiques, il est préférable d'interposer un filtre 42 sur le trajet du rayon dévié, devant la photodiode 3. Ce filtre 42 est avantageusement constitué par un second miroir dichroïque, identique au précédent.

Les deux miroirs dichroïques 41 et 42 ont une forme sensiblement carrée ou rectangulaire : ils sont collés par une tranche sur la plaque métallique 28.

L'invention a été exposée en s'appuyant sur l'exemple d'un duplexeur, mais, selon la nature des semiconducteurs optoélectroniques 2 et 3, elle s'applique à d'autres types de têtes optiques :
- un multiplexeur : les deux semiconducteurs 2 et 3 sont des émetteurs, diodes lasers ou diodes électroluminescentes,
- démultiplexeur : ce sont deux récepteurs, photodiodes,
- coupleur : dans ce cas, le miroir dichroïque est remplacé par une lame semi-réfléchissante.

Les têtes optiques selon l'invention sont utilisées dans les systèmes de transmission de données par fibres optiques.

## Revendications

1. Tête optique intégrable sur un circuit hybride, comportant :
- une fibre optique (1),
- un premier ensemble optoélectronique (2,31,36) à semiconducteurs, placé sur l'axe de la fibre optique (1), pour l'émission ou la réception d'un faisceau lumineux transmis à ou par la fibre optique (1),
- un second ensemble optoélectronique (3,40) à semiconducteurs, placé en dehors de l'axe de la fibre optique (1), pour l'émission ou la réception d'un faisceau lumineux transmis à ou par la fibre optique (1), et
- un moyen de déviation (41) de faisceau lumineux, disposé entre la fibre optique (1) et le premier ensemble optoélectronique, pour rediriger le faisceau lumineux transmis entre le second ensemble optoélectronique (3,40) et la fibre optique (1),
- la fibre optique (1), les premier (2,31,36) et second (3,40) ensembles optoélectroniques et le moyen de déviation (41) étant fixés sur un substrat (28) rigide,
cette tête optique étant caractérisée en ce que :
ledit substrat rigide (28) est un substrat plan, céramique ou métallique, qui est pris comme plan de référence pour l'alignement optique,
- la fibre optique (1) est montée dans l'une des extrémités d'un tube métallique (29), fixé sur le substrat (28) par brasure ou collage, l'autre extrémité dudit tube, située en regard du premier ensemble optoélectronique (2 +31+36), portant une lentille de focalisation (30),
- dans le premier ensemble optoélectronique, le semiconducteur (2) émetteur ou récepteur de lumière est fixé sur une plaquette isolante (32) elle-même fixée sur une première plaquette métallique (33) brasée sur le substrat (28), et une première lentille sphérique (36), en verre ou en saphir, est collée sur le substrat (28), entre le semiconducteur (2) et le moyen de déviation (41),
- dans le second ensemble optoélectronique, le semiconducteur (3) émetteur ou récepteur de lumière est fixé sur une plaquette isolante (37) elle même fixée sur une deuxième plaquette métallique (38) brasée sur le substrat (28), et une deuxième lentille sphérique (40), en verre ou en saphir, est collée sur la deuxième plaquette (38), devant le semiconducteur (3).

2. Tête optique selon la revendication 1, caractérisée en ce que le moyen de déviation (41) d'un faisceau lumineux est constitué par un miroir dichroïque, qui laisse passer un faisceau d'une première longueur d'onde (λ1) vers le premier ensemble optoélectronique (2) sans déviation, et qui renvoie un faisceau d'une deuxième longueur d'onde (λ2) vers le second ensemble optoélectronique (3).

3. Tête optique selon la revendication 1, caractérisée en ce qu'un filtre (42), de type miroir dichroïque, est interposé sur le trajet du faisceau dévié, devant le second semiconducteur (3).

4. Tête optique selon l'une quelconque des revendications 2 ou 3, caractérisée en ce que le moyen de déviation (41) et le filtre (42) sont des lames, collées par leur tranche sur le substrat (28).

5. Tête optique selon la revendication 1, caractérisée en ce qu'elle constitue un duplexeur, le premier semiconducteur (2) étant un laser et le second semiconducteur (3) étant une photodiode.

6. Tête optique selon la revendication 1, caractérisée en ce qu'elle constitue un multiplexeur, les deux semiconducteurs (2,3) étant deux lasers.

7. Tête optique selon la revendication 1, caractérisée en ce qu'elle constitue un démultiplexeur, les deux semiconducteurs (2,3) étant des photodiodes.

8. Tête optique selon la revendication 1, caractérisée en ce qu'elle constitue un coupleur, le moyen de déviation (41) étant une lame semiréfléchissante.

## Patentansprüche

1. In eine Hybridschaltung integrierbarer optischer Kopf
- mit einer Lichtleitfaser (1),
- mit einer ersten optoelektronischen Einheit (2, 31, 36) mit Halbleitern, die in der Achse der Lichtleitfaser (1) liegt und die Aussendung eines Lichtstrahls in Richtung auf die Lichtleitfaser (1) bzw. den Empfang eines Lichtstrahls von dieser Faser bewirkt,
- mit einer zweiten optoelektronischen Einheit (3, 40) mit Halbleitern, die außerhalb der Achse der Lichtleitfaser (1) liegt und die Aussendung eines Lichtstrahls in Richtung auf die Lichtleitfaser (1) bzw. den Empfang eines Lichtstrahls von dieser Faser bewirkt,
- mit einem Ablenkmittel (41) für den Lichtstrahl, das zwischen der Lichtleitfaser (1) und der ersten optoelektronischen Einheit liegt und den zwischen der zweiten optoelektronischen Einheit (3, 40) und der Lichtleitfaser (1) übertragenen Lichtstrahl umlenkt,
- wobei die Lichtleitfaser (1), die erste (2, 31, 36) und die zweite optoelektronische Einheit (3, 40) sowie das Ablenkmittel (41) auf einem starren Substrat (28) befestigt sind, dadurch gekennzeichnet,
- daß das starre Substrat (28) ein ebenes Substrat aus Keramik oder Metall ist und als Bezugsebene für die optische Ausfluchtung verwendet wird,
- daß die Lichtleitfaser (1) an einem der Enden eines Metallröhrchens (29) montiert ist, das auf dem Substrat (28) durch Lötung oder Klebung befestigt ist, während das andere Ende des Röhrchens, das gegenüber der ersten optoelektronischen Einheit (2, 31, 36) liegt, eine Fokussierlinse (30) trägt,
- daß in der ersten optoelektronischen Einheit der lichtaussendende oder empfangende Halbleiter (2) auf einem isolierenden Plättchen (32) befestigt ist, das seinerseits auf einer ersten Metallplatte (33) befestigt ist, welche auf das Substrat (28) aufgelötet ist, während eine erste sphärische Linse (36) aus Glas oder Saphir auf das Substrat (28) zwischen den Halbleiter (2) und das Ablenkmittel (41) geklebt ist,
- daß in der zweiten optoelektronischen Einheit der lichtaussendende oder -empfangende Halbleiter (3) auf einem isolierenden Plättchen (37) befestigt ist, das seinerseits auf der zweiten Metallplatte (38) befestigt ist, welche auf das Substrat (28) aufgelötet ist, während eine zweite sphärische Linse (40) aus Glas oder aus Saphir auf die zweite Metallplatte (38) vor dem Halbleiter (3) geklebt ist.

2. Optischer Kopf nach Anspruch 1, dadurch gekennzeichnet, daß das Mittel (41) zur Ablenkung eines Lichtstrahls aus einem dichroitischen Spiegel besteht, der einen Lichtstrahl einer ersten Wellenlänge (λ1) zur ersten optoelektronischen Einheit (2) ohne Ablenkung durchläßt und einen Lichtstrahl einer zweiten Wellenlänge (λ2) in Richtung auf die zweite optoelektronische Einheit (3) ablenkt.

3. Optischer Kopf nach Anspruch 1, dadurch gekennzeichnet, daß ein Filter (42) vom Typ eines dichroitischen Spiegels in die Bahn des abgelenkten Lichtstrahls vor dem zweiten Halbleiter (3) eingefügt ist.

4. Optischer Kopf nach einem beliebigen der Ansprüche 2 oder 3, dadurch gekennzeichnet, daß das Ablenkmittel (41) und das Filter (42) Plättchen sind, die mit ihrer Schnittkante auf das Substrat (28) aufgeklebt sind.

5. Optischer Kopf nach Anspruch 1, dadurch gekennzeichnet, daß er einen Duplexer bildet, wobei der erste Halbleiter (2) ein Laser und der zweite Halbleiter (3) eine Fotodiode ist.

6. Optischer Kopf nach Anspruch 1, dadurch gekennzeichnet, daß er einen Multiplexer bildet, wobei die beiden Halbleiter (2, 3) Laser sind.

7. Optischer Kopf nach Anspruch 1, dadurch gekennzeichnet, daß er einen Demultiplexer bildet, wobei die beiden Halbleiter (2, 3) Fotodioden sind.

8. Optischer Kopf nach Anspruch 1, dadurch gekennzeichnet, daß er einen Koppler bildet, wobei das Ablenkmittel (41) ein halb reflektierendes Plättchen ist.

## Claims

1. Optical head which can be integrated on a hybrid circuit, including:
- an optical fibre (1),
- a first semiconductor optoelectronic assembly (2,31,36) placed on the axis of the optical fibre (1), for the emitting or receiving of a light beam transmitted to or by the optical fibre (1),
- a second semiconductor optoelectronic assembly (3,40) placed off the axis of the optical fibre (1), for the emitting or receiving of a light beam transmitted to or by the optical fibre (1), and
- a means of deflection (41) of the light beam, arranged between the optical fibre (1) and the first optoelectronic assembly, in order to redirect the light beam transmitted between the second optoelectronic assembly (3,40) and the optical fibre (1),
- the optical fibre (1), the first (2,31,36) and second (3,40) optoelectronic assemblies and the means of deflection (41) being fixed on a rigid substrate (28),
this optical head being characterized in that:
- the said rigid substrate (28) is a ceramic or metallic plane substrate which is taken as reference plane for optical alignment,
- the optical fibre (1) is mounted in one of the ends of a metal tube (29) fixed on the substrate (28) by brazing or cementing, the other end of the said tube, situated facing the first optoelectronic assembly (2,31,36), carrying a focusing lens (30),
- in the first optoelectronic assembly, the light emitting or receiving semiconductor (2) is fixed on an insulating strip (32) itself fixed on a first metal strip (33) brazed to the substrate (28), and a first spherical lens (36), made from glass or sapphire, is cemented to the substrate (28), between the semiconductor (2) and the means of deflection (41),
- in the second optoelectronic assembly, the light emitting or receiving semiconductor (3) is fixed on an insulating strip (37) itself fixed on a second metal strip (38) brazed to the substrate (28), and a second spherical lens (40), made from glass or sapphire, is cemented to the second strip (38), in front of the semiconductor (3).

2. Optical head according to Claim 1, characterized in that the means of deflection (41) of a light beam consists of a dichroic mirror, which allows through a beam of a first wavelength (λ1) towards the first optoelectronic assembly (2) without deflection, and which diverts a beam of a second wavelength (λ2) towards the second optoelectronic assembly (3).

3. Optical head according to Claim 1, characterized in that a filter (42), of the dichroic mirror type, is interposed in the path of the deflected beam, in front of the second semiconductor (3).

4. Optical head according to either of Claims 2 or 3, characterized in that the means of deflection (41) and the filter (42) are laminae, cemented edgewise to the substrate (28).

5. Optical head according to Claim 1, characterized in that it constitutes a duplexer, the first semiconductor (2) being a laser and the second semiconductor (3) being a photodiode.

6. Optical head according to Claim 1, characterized in that it constitutes a multiplexer, the two semiconductors (2,3) being two lasers.

7. Optical head according to Claim 1, characterized in that it constitutes a demultiplexer, the two semiconductors (2,3) being photodiodes.

8. Optical head according to Claim 1, characterized in that it constitutes a coupler, the means of deflection (41) being a semi-reflecting lamina.
